# EUROPEAN PATENT APPLICATION

(11) **EP 3 623 837 A1**
(43) Date of publication of application: **18.03.2020**
(21) Application number: 18194560.1
(22) Date of filing: 14.09.2018
(51) Int. Cl.: G01S 5/14, G01S 5/00, G01S 19/42, G06Q 10/08

(54) **CARRIER UTILIZATION TRACKING**

(71) Applicant: Hitech & Development Wireless Sweden AB, 164 51 Kista (SE)
(72) Inventor: GRAHN, Anders, 164 51 Kista (SE); JERNBERGER, Åke, 164 51 Kista (SE); BERGSTEN, Pär, 164 51 Kista (SE)
(74) Representative: AWA Sweden AB

(57) **Abstract**

There is disclosed an arrangement for detecting a load (4) carried by a carrier (2) intended to be tracked by a real-time locating system. The arrangement comprises: a tag (5) intended to be arranged on the carrier (2), the tag (5) being configured to generate a wireless signal allowing determination of a position of the tag (5); and at least one detector (6) configured to detect the load (4) carried by the carrier (2) and to generate a wireless signal indicative of at least one of whether or not a load (4) is carried by the carrier (2) and an amount of load carried by the carrier (2). The arrangement allows for accurate carrier utilization tracking in a cost-effective manner. A real-time locating system comprising such an arrangement and a method for detecting a load carried by a carrier are also disclosed.

## Description

### TECHNICAL FIELD

The present invention relates generally to carrier utilization tracking. Specifically, the present invention relates to an arrangement and a method for detecting a load carried by a carrier to be tracked by a real-time locating system. The present invention also relates to a real-time locating system comprising such an arrangement.

### BACKGROUND

Many businesses use various types of carriers to transport items on their premises as well as to and from their premises. Some common carriers are boxes, pallets and forklifts, and they may for example be used to transport raw materials and semi-finished products between assembly lines in a factory or to transport finished products from a warehouse to sales outlets.

As an aid in their efforts to optimize workflow and productivity, some businesses use systems for tracking carrier utilization. However, current solutions for tracking carrier utilization are considered inadequate or too complicated, and there is thus a perceived need for new solutions.

### SUMMARY

An objective of the present invention is to provide an improved or alternative solution for tracking carrier utilization.

According to a first aspect of the present invention, there is presented an arrangement for detecting a load carried by a carrier intended to be tracked by a real-time locating system, wherein the arrangement comprises: a tag intended to be arranged on the carrier, wherein the tag is configured to generate a wireless tag signal allowing determination of a position of the tag; and at least one detector intended to be arranged separately from the tag on the carrier, wherein the at least one detector is configured to detect the load carried by the carrier and to generate a wireless detector signal comprising detector identity information and load information, wherein the detector identity information allows for the detector to be identified, and wherein the load information is indicative of at least one of whether or not a load is carried by the carrier and an amount of load carried by the carrier.

By "carrier" is herein meant a device intended for holding one or more objects to be transported from one place to another. The carrier may be motorized, and thus capable of self-propulsion, or intended to be pushed, pulled or carried by someone or something. The carrier may for example be a box, a pallet, a package, a wagon or a forklift. The carrier may be a so-called returnable transport package.

The "amount of load" carrier by the carrier may for example be the number of items that the carrier is carrying or the weight of the load carried by the carrier.

The present invention is based on the realization that a real-time locating system can advantageously be used also for carrier utilization tracking. Having one and the same system providing data regarding positions as well as loads not only provides economic benefits but also facilitates the obtaining of accurate carrier utilization data in real time, and the subsequent processing thereof. The present invention does not require extensive modification to the real-time locating system and is, consequently, particularly simple and cost-effective to implement.

It is noted that, by using a detector which is separate from the tag, the positions of both of these components can be optimized. Further, it is noted that, in some applications, it may be sufficient to know whether or not the carrier carries a load. In others, however, it may be desirable to know not only whether or not there is a load on the carrier but also how much the carrier is carrying. Thereby, the utilization of the carrier can be tracked more accurately and, moreover, a warning can be generated if the carrier is about to run out of whatever supplies it is carrying.

The detector may for example be one of a proximity sensor, a weight sensor and a camera.

The tag may be configured to receive the wireless detector signal, and to include the detector identity information and the load information in the wireless tag signal.

The tag may be configured to detect its position, wherein the wireless tag signal is indicative of the detected position.

The tag may be configured to send the wireless tag signal to a server of the real-time locating system. The arrangement thereby becomes particularly suitable for use in situations where the tracked carrier does not, or does not only, move within a predetermined zone, such as a building, but is transported by for example a lorry travelling on public roads, a train, a ship or an airplane. The tag may be configured to generate the wireless tag signal upon receiving a request from the server. Thereby, the power consumption of the tag may be reduced. However, the tag may be configured to automatically, for example periodically, generate the wireless tag signal, without the server having to send a request.

The at least one detector may be configured to send the wireless detector signal to an anchor point of the real-time locating system. This is typically the case if the tracked object moves within a predetermined zone, such as the premises of a factory, a warehouse or a hospital. The predetermined zone may be indoors, outdoors or a combination thereof.

The detector is typically configured to generate several wireless detector signals, each wireless detector signal being indicative of whether or not a load is currently carried by the carrier. For example, the detector may be configured to periodically generate wireless detector signals. As another example, the detector may be configured to generate a wireless detector signal upon request by an external device, such as the tag or a server of a real-time positioning system. Each wireless detector signal may include sequence information indicative of a chronological order of the wireless detector signal relative to other wireless detector signals.

The tag is typically configured to generate several wireless tag signals, each wireless tag signal allowing the real-time locating system to determine a current position of the tag. For example, the tag may be configured to periodically generate wireless tag signals. As another example, the wireless tag may be configured to generate a wireless tag signal upon request by an external device, such as an anchor point or a server of a real-time positioning system. Each wireless tag signal may comprise tag identity information and sequence information, the tag identity information allowing for the tag to be identified, and the sequence information being indicative of a chronological order of the wireless tag signal relative to other wireless tag signals.

According to a second aspect of the present invention there is presented a real-time locating system comprising: at least one arrangement according to the first aspect of the present invention; and a server configured to receive the detector identity information and load information and to determine at least one of whether or not a load is carried by the carrier and an amount of load carried by the carrier.

It will be appreciated that the real-time locating system according to the second aspect of the present invention may provide for technical effects that are largely analogous to those of the arrangement according to the first aspect of the invention.

The server may be configured to receive the wireless tag signal. This makes the real-time positioning system particularly suitable for tracking objects which are transported on lorries travelling on public roads, trains, ships or airplanes, or a combination thereof, and which thus do not move within a predetermined zone, such as the premises of a building.

The real-time locating system may comprise several anchor points intended to be arranged at respective fixed positions, wherein each anchor point is configured to receive the wireless tag signal and the wireless detector signal and to generate a wireless anchor signal based on the received tag signal and the received detector signal, wherein the server is configured to receive the wireless anchor signal. Such a real-time positioning system is particularly suitable for tracking objects moving within a predetermined zone, such as a factory, a warehouse or a hospital. The predetermined zone may be indoors, outdoors or a combination thereof.

The anchor points may be configured to generate the wireless anchor signals upon receiving a request from the server. Thereby, the power consumption of the anchor points may be reduced. It is noted, however, that the anchor points may be configured to automatically, for example periodically, generate wireless anchor signals, without the server having to send a request.

Each anchor point may be configured to include respective time information in the wireless anchor signal, wherein the time information comprises a time of receipt of the wireless detector signal and a time of receipt of the wireless tag signal, and the server may be configured to associate the wireless tag signal with the wireless detector signal based on the time information.

The server may be configured to transmit a wireless server signal to an external display device, wherein the wireless server signal is indicative of the position of the tag and at least one of one of whether or not a load is carried by the carrier and an amount of load carried by the carrier. The external display device may be configured to visually present information regarding the position and load to a user.

According to a third aspect of the present invention, there is presented a method for detecting a load carried by a carrier intended to be tracked by a real-time locating system, wherein the method comprises: arranging a tag on the carrier; arranging at least one detector separately from the tag on the carrier, wherein the at least one detector is configured to detect the load carried by the carrier; generating, by the tag, a wireless tag signal allowing determination of a position of the tag; and generating, by the detector, a wireless detector signal comprising detector identity information and load information, wherein the detector identity information allows for the detector to be identified, and wherein the load information is indicative of at least one of whether or not a load is carried by the carrier and an amount of load carried by the carrier.

It will be appreciated that the method according to the third aspect of the present invention may provide technical effects that are largely analogous to those of the arrangement according to the first aspect of the invention and the real-time locating system according to the second aspect of the present invention.

The method may comprise: receiving, by a server of the real-time locating system, the detector identity information and load information; and determining, by the server, at least one of whether or not a load is carried by the carrier and an amount of load carried by the carrier.

The method may comprise visualizing, by a display device, the position of the tag and at least one of one of whether or not a load is carried by the carrier and an amount of load carried by the carrier.

### BRIEF DESCRIPTION OF THE DRAWINGS

The present invention will be described in more detail with reference to the appended drawings which show examples of embodiments of the present invention.
Figures 1 illustrates schematically a real-time locating system according to an embodiment of the invention.
Figure 2 illustrates schematically a box provided with an arrangement for detecting a load carried by the box according to an embodiment of the invention.
Figure 3 illustrates schematically a forklift with an arrangement for detecting a load carried by the forklift according to an embodiment of the invention.
Figure 4 illustrates schematically a real-time locating system according to an embodiment of the invention.

### DETAILED DESCRIPTION

The present invention will now be described more fully hereinafter with reference to the accompanying drawings showing embodiments of the invention. The present invention may, however, be embodied in many different forms and should not be construed as limited to the embodiments set forth herein. Rather, these embodiments are provided for thoroughness and completeness, and fully convey the scope of the invention to a person skilled in the art.

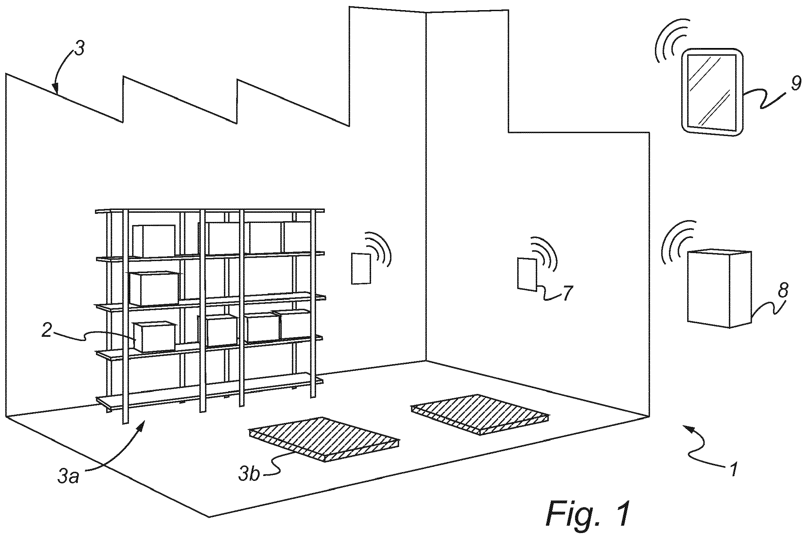

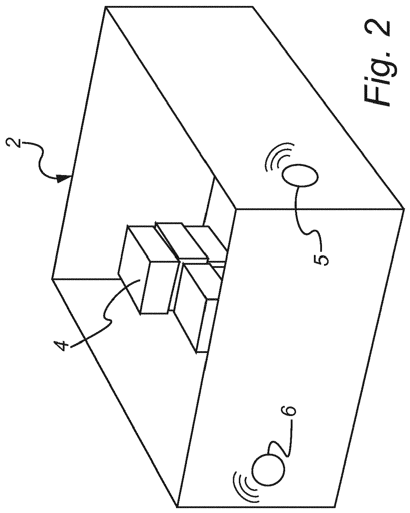

With reference to Figures 1 and 2, a real-time locating system (RTLS) 1 according to an example embodiment of the invention will now be described. The RTLS 1 is a type of wireless network comprising multiple nodes which communicate wirelessly with each other. The RTLS 1 is in this case arranged to track objects within a predetermined zone. More specifically, the RTLS 1 is in this case arranged to track several carriers 2 inside a factory 3. The total number of carriers 2 tracked by the RTLS 1 may for example be in the hundreds or in the thousands. The carriers 2 are here returnable transport packages in the form of boxes. The boxes 2 are adapted to contain various loads 4. Each load 4 is in this case an item used in the production taking place in the factory 3. In Figure 1, the boxes 2 are illustrated in a storage area 3a of the factory 3, but the boxes 2 are frequently moved away from the storage area 3a to various production sites 3b (which, like the storage area 3a, are schematically illustrated in Figure 1) inside the factory 3, as will be further discussed below.

The RTLS 1 comprises tags 5, or mobile nodes, which are attached to the boxes 2. The tags 5 may for example be attached to the boxes 2 by mechanical means, such as pins or clamps, or by chemical means, such as glue or some other adhesive. In this case, there is one tag 5 attached to each box 2. Thus, there is one tag 5 associated with each box 2. The tags 5 are here attached to side walls of the boxes 2, but the tags 5 may of course be arranged elsewhere on the boxes 5 in a different example. The tag 5 illustrated in Figure 2 has a circular shape and a diameter in the centimeter range, but the size and/or shape of the tags 5 of course be different in a different example. Each tag 5 here comprises a power source in the form of a battery (not shown).

The tags 5 are a type of wireless devices, because each tag 5 is configured to generate wireless signals. The wireless signals generated by the tags 5 are herein referred to as wireless tag signals or simply tag signals. Each tag 5 is in this example configured to repeatedly send out a tag signal. Specifically, the tag signals are here sent out periodically by the tags 5. The frequency with which the tags 5 send out tag signals depends on application-specific requirements. The higher the frequency, the better the precision with which the RTLS 1 can determine the positions of the tags 5. However, the power consumption of the tags 5 typically increases with the frequency. The tags 5 are usually configured to send out a tag signal approximately every second.

In this case, each tag signal comprises a tag identity information and sequence data. The tag identity information is data indicating from which tag 5 the tag signal was sent, and the sequence data is data indicating the position of the tag signal in the sequence of tag signals sent out by a particular tag 5.

It should be noted that the tag signals may, in a different example, comprise additional data. For example, in some applications it may be advantageous to provide the boxes 2 with additional sensors, such as a thermometer and/or an accelerometer. In such case, the tag signal may include data from such sensors. The sensors may be either integrated with or separate from the tags 5.

The tag signals are in this example ultra-wideband signals. However, the tag signals may be some other type of wireless signals in a different example, such as Bluetooth signals, Bluetooth low energy signals or Wi-Fi signals. Which wireless technology is chosen for a particular application depends on various factors, such as how much power the tags 5 should consume and how precisely the RTLS 1 should the able to locate the boxes 2.

The RTLS 1 further comprises detectors 6, which may be referred to as mobile nodes. The detectors 6 are separate from the tags 5. The detectors 6 are arranged on the boxes 2. The detectors 6 may for example be attached to the boxes 2 by mechanical means, such as pins or clamps, or by chemical means, such as glue or some other adhesive. In this case, there is one detector 6 attached to each box 2. Thus, each detector 6 is here associated with one box 2. Of course, in a different example, there may be two or more detectors 6 on each box 2, or there may be a different number of detectors 6 arranged on different boxes 2. The detectors 6 are here attached to side walls of the boxes 2, but the detectors 6 may of course be arranged elsewhere on the boxes 2 in a different example. Each detector 6 here comprises a power source in the form of a battery (not shown).

Each detector 6 is here configured to detect whether or not there are any items 4, i.e. loads, in the box 2 on which the detector 6 is arranged. The detectors 6 are in this case proximity sensors capable of detecting the presence of nearby objects without physical contact. Specifically, the detectors 6 are in this case configured to emit an electromagnetic field and detect changes in the field which indicate the presence of a nearby object. It should be noted that the detectors 6 may in a different example be some other type of proximity sensors or some other type of detectors than proximity sensors, such as weight sensors or cameras.

The detectors 6 are further configured to generate wireless signals, which herein are referred to as wireless detector signals or simply detector signals. Each detector 6 is in this case configured to repeatedly send out a detector signal. Specifically, the detector signals are here sent out periodically by the detectors 6. The frequency with which the detectors 6 send out detector signals depends on, for example, how much power the detectors 6 should consume. Typically, the detectors 6 send out detector signals as often as the tags 5 send out tag signals. The detector signals are in this case ultra-wideband signals. Thus, the detector signals and the tag signals are here of the same type. In a different example, however, the detector signals may be a different type of wireless signal, such as Bluetooth signals, Bluetooth low energy signals or near-field communication signals. Which type of signal is suitable for a specific application depends on various factors, such as how much power the detectors 6 should consume.

In this case, each detector signal comprises a detector identity information and load data. The detector identity information is data indicating from which detector 6 the detector signal was sent, and the load data is data indicating the presence or absence, at a particular moment in time, of items 4 in the box 2 on which the detector 6, which sends out the detector signal, is attached. The detector signal may in a different example comprise additional information, such as sequence data indicating the position of the detector signal in the sequence of detector signals sent out by the detector 6.

It should be the type of data included in the detector signal may vary depending on the type of the detectors 6. For example, if the detectors 6 are weight sensors, the detector signals typically comprise the weights of the boxes 2. The weights may allow not only the presence or absence of items in the box to be determined but also how many items the box contains, if any. Further, if the detectors 6 are cameras, the detector signals typically comprise images of the boxes 2. Again, the images may allow not only the presence or absence of items in the box to be determined but also how many items the box contains, if any.

It is noted that the detectors 6 and the tags 5 may be referred to as an arrangement which is intended to be arranged on carriers, here the boxes 2, to be tracked by the RTLS 1.

The RTLS 1 in this case comprises several anchor points 7, henceforth referred to as anchors for brevity, configured to receive the tag signals emitted by the tags 5 and the detector signals emitted by the detectors 6. Thus, the anchors 7 may be referred to as a type of wireless devices. The anchors 7 are here arranged at fixed positions inside the factory 3 and may be referred to as fixed nodes. More precisely, the anchors 7 are in this case arranged on the walls of the factory 3, although the anchors 7 may be arranged elsewhere, such as on the ceiling, in a different example. The anchors 7 are in this case positioned approximately 15 meters to 20 meters from each other.

The anchors 7 are configured to generate wireless signals, which herein are referred to as wireless anchor signals or simply anchor signals. The anchors 7 are thus a type of wireless devices. The anchor signals are in this case Wi-Fi signals, although the anchor signals can be some other type of wireless signals in a different example, such as GSM signals or LTE signals. The anchor signals sent out by an anchor 7 are based on the tag signals and detector signals received by the anchor 7. That is to say, the information in the anchor signals is based on the information in the tag signals and in the detector signals. In this case, the anchor signals also comprise time information. Specifically, each anchor signal emitted by an anchor 7 here includes time information comprising the time of receipt of at least one detector signal and the time of receipt of at least one tag signal. The anchor signals may also include other data, such as received signal strength indicators (RSSI).

The anchors 7 are in this case configured to send out the anchor signals upon request by another device or, more precisely, the server 8 discussed below. It is noted that the anchors 7 may, in a different example, be configured to automatically send out anchor signals in a repeated manner, instead of only upon request. The anchors 7 may for example be configured to send out a tag signal approximately every second.

As mentioned above, the RTLS 1 further comprises a server 8. The server 8 is in this case arranged remotely from the factory 3. However, in a different example, the server 8 may be arranged locally, such as inside the factory 3. The server 8 is in this case configured to receive the anchor signals. Thus, the server 8 is here configured to communicate wirelessly with anchors 7, in this case via a Wi-Fi network. The server 8 and the anchors 7 may in a different example be configured to communicate via some other type of network, such as a GSM network or an LTE network, or a combination of networks. The communication between the anchors 7 and the server 8 may be secured, for example in the manner described in U.S. Patent No. 9,356,931 issued to the present applicant. The server 8 is in this example configured to send, for example periodically, requests for anchor signals to the anchors 7. In a different example, the server 8 may be configured to receive the anchor signals sent out by the anchors 7, without sending requests therefor. The server 8 is typically communication technology agnostic, i.e. compatible with different ways of accessing a TCP/IP backbone network. The server 8 may be configured to access a TCP/IP backbone network via a wireless connection and/or via a wired connection.

The server 8 is configured to process the information included in the anchor signals. Specifically, the server 8 is in this case configured to determine, based on the received anchor signals, the positions of the tags 5. In this case the server 8 uses a Time Difference of Arrival method to determine the positions of the tags 5. Since the tags 5 are arranged on the boxes 2, the server 8 thereby determines the locations of the boxes 2. The server 8 is here also configured to determine, based on the received anchor signals, the presence or absence of items 4 in each of the boxes 2. Differently stated, the server 8 is configured to determine whether or not each box 2 contains a load.

When determining the positions of the tags 5 and whether or not the boxes 2 contain loads, the server 8 here uses not only the information included in the anchor signals but also some pieces of information that are pre-stored in the server 8, such as the positions of the anchors 7 and which box 2 is provided with which tag 5 and which detector 6. Further, it is noted that the anchor signals in this case include the tag identity information and the detector identity information, something which the server 8 here uses for determining from which tag 5 a particular tag signal was emitted and from which detector 6 a particular detector signal was emitted. Still further, as noted above, each anchor signal in this case includes information on the times when the tag signals and the detector signals were received by that anchor 7. The server 8 here uses this information to associate a particular tag signal with the detector signal that the anchor 7 received closest in time to that tag signal.

The server 8 is in this case configured to send a wireless signal, which comprises the determined positions and loads, to an external display device 9, such as a desktop computer, a laptop computer, a tablet computer or a mobile phone. A wireless signal sent by the server 8 to the external display device 9 is herein referred to as a wireless server signal. The external display device 9 is here be configured to visualize, for example in real time, where the boxes 2 are located inside the factory 3 and whether or not the boxes 2 carry any loads. Further, the server 8 may be configured to evaluate the determined positons and/or loads according to a set of rules and to generate a signal based on the evaluation. For example, the server 8 may be configured to send an alarm signal to an operator if a box 2 has entered a particular zone or if a box is empty. Still further, the server 8 may be configured to store the determined positions and loads for later analysis. Such analysis may for example be related to the capacity utilization of the boxes 2 and the "flow" of the boxes 2 throughout the factory 3.

In use, the RTLS 1 in this case operates in the following manner. As mentioned above, the factory 3 illustrated in Figure 1 has a storage area 3a where the boxes 2 may be stored. When a particular item 4 is needed at a production site 3b, a factory worker first picks up the box 2 with that item 4 and transports the box 2 from the storage area 3a to the production site 3b. Subsequently, the worker subsequently returns the box 2 to the storage area. The worker may for example use a forklift or a wagon to transport the boxes 2 back and forth.

The tags 5 and the detectors 6 repeatedly send out tag signals and detector signals, respectively, which are received by the anchors 7. It should be noted that the tag signal and the detector signal from a box 2 are not necessarily received by every anchor 7 all the time, for example because of too long a distance between the box 2 and a particular anchor 7. Further, in this case, each anchor 7 stores the information included in the received signals and, when requested by the server 8, sends out an anchor signal with the stored information together with the times when the signals were received according to the anchor 7. Hence, the amount of information included in an anchor signal sent by an anchor 7 here depends on how many tag signals and detector signals that anchor 7 has received since sending the previous anchor signal and receiving a new request from the server 8. The anchors 7 may be configured to not include some of the stored information in the anchor signal, such as information that is deemed too "old".

The server 8 uses the information in the anchor signals to determine the locations of the boxes 2 and whether or not the boxes 2 are carrying any items 4. The server 8 sends a wireless server signal, which comprises the location information and the load information, to the external display device 9 for user visualization. The visualization here occurs in real time, which in this context is not meant to exclude that there may be a time delay of one second or a few seconds.

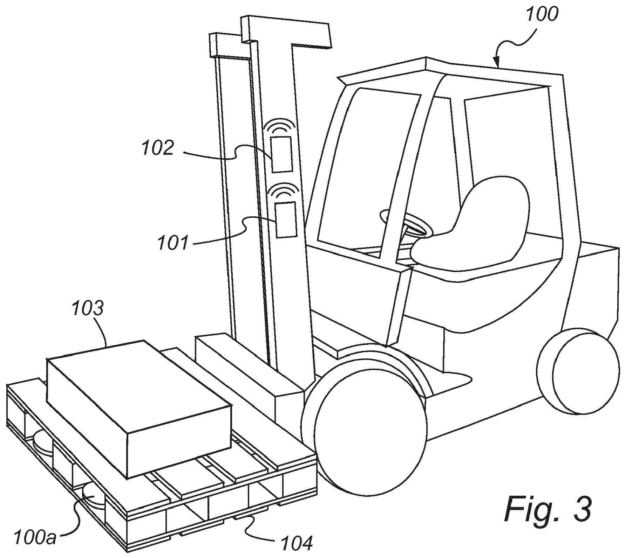

Figure 3 shows an arrangement for detecting a load carried by a carrier 100 in the form of a forklift. The arrangement can be included in the RTLS 1 described above in connection with Figures 1 and 2. The arrangement comprises a tag 101 and a detector 102, which are arranged on the forklift 100. The tag 101 allows for the position of the forklift 100 to be determined and operates in the same way as the tag 2 described above in connection with Figures 1 and 2. The detector 102 is in this case is a camera. The detector 102 is arranged on the forklift 100 so as to be able to take pictures of a load carried by the forks 100a of the forklift 100. By analyzing the pictures taken by the detector 102, it is possible to determine whether or not the forklift 100 is at a given point in time is carrying a load. In the example illustrated in Figure 3, the forklift 100 is carrying a load 103 in the form of a box. The box 103 is arranged on a pallet 104. The pictures may for example be shown a computer screen or some other display device, so that the pictures can be manually inspected. Alternatively, or in addition, the pictures may for example be analyzed by the server of the RTLS, using image analysis software. It is noted that the server may be configured to extract additional information from the images, such as how many boxes 103 are carried by the forklift 100, i.e. a measure of an amount of load carried by the forklift 100. As another example, the server may be configured to determine what type of load is carried by the forklift 100.

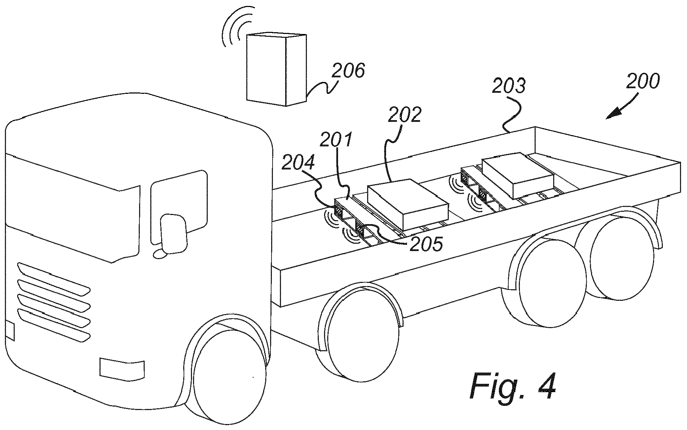

Figure 4 shows an example of an RTLS 200 which is similar to the RTLS 1 discussed above in connection with Figures 1 and 2. However, the RTLS 200 illustrated in Figure 4 is configured to track objects which do not move within a predetermined zone. The RTLS 200 is here used for tracking carriers 201 in the form of pallets. The pallets 201 are here returnable transport packages. The pallets 201 carry loads 202 in the form of boxes. The pallets 201 with the boxes 202 are in this case being transported by a truck 203 on a road.

The RTLS 200 comprises tags 204 and detectors 205. Each pallet 201 has one tag 204 and one detector 205 attached thereto. The tags 204 and the detectors 205 are configured to communicate wirelessly with each other. Specifically, the tags 204 are configured to receive wireless signals generated by the detectors 205. The detector signals sent by the detectors 205 are similar to, and contain similar information as, the detector signals sent by the detectors 6 discussed in connection with Figures 1 and 2.

The RTLS 200 system further comprises a remote server 206 which is configured to communicate wirelessly with the tags 204. In this case, the tags 204 and the server 206 are configured to communicate over a cellular network, such as a GSM network or an LTE network. Thus, unlike the RTLS 1 discussed above in connection with Figures 1 and 2, the RTLS 200 does not have any anchors 7 with which the tags 204 and the detectors 205 communicate. Instead, the tags 204 are in this case configured to send the tag signals directly to the server 206, and the detectors 205 are configured to send the detector signals to the tags 204. Specifically, each detector 204 is here configured to send the detector signals to the tag 205 that is arranged on the same pallet 201 as the detector 205. The tags 204 may be regarded as anchors for the detectors 205.

Further, unlike the tags 5 discussed above in Figures 1 and 2, tags 204 in Figure 4 are capable of determining their own positions. Specifically, each tag 204 is in this case configured to determine its coordinates using a Global Positioning System (GPS). Each tag 204 communicates its position, together with load information and detector identity information received from the detector 205, which is arranged on the same pallet 201, to the server 206. The server 206 may then process and use the received data in a similar manner to the server 8 described above in connection with Figures 1 and 2, except that the server 206 does not need to determine the positions of the tags 204 since this information is already included in the tag signals.

The person skilled in the art realizes that the present invention by no means is limited to the embodiments described above. On the contrary, many modifications and variations are possible within the scope of the appended claims. For example, the embodiment in Figure 1 may be combined with the embodiment in Figure 4, so that the tracked object can be tracked both within a predetermined zone, i.e. when the anchors are within range to receive the signals emitted from the tracked object, and outside of the predetermined zone, i.e. when the anchors are out of range to receive those signals. The transition from the anchors receiving the tag signal to the server receiving the tag signal, and vice versa, may include a handover process.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An arrangement for detecting a load (4; 103; 202) carried by a carrier (2; 100; 201) intended to be tracked by a real-time locating system (1; 200), wherein the arrangement comprises:
a tag (5; 101; 204) intended to be arranged on the carrier (2; 100; 201), wherein the tag (5; 101; 204) is configured to generate a wireless tag signal allowing determination of a position of the tag (5; 101; 204); and
at least one detector (6; 102; 205) intended to be arranged separately from the tag (5; 101; 204) on the carrier (2; 100; 201), wherein the at least one detector (6; 102; 205) is configured to detect the load (4; 103; 202) carried by the carrier (2; 100; 201) and to generate a wireless detector signal comprising detector identity information and load information, wherein the detector identity information allows for the detector (6; 102; 205) to be identified, and wherein the load information is indicative of at least one of whether or not a load (4; 103; 202) is carried by the carrier (2; 100; 201) and an amount of load carried by the carrier (2; 100; 201).

2. The arrangement according to claim 1, wherein the detector (6; 102; 205) is one of a proximity sensor, a weight sensor and a camera.

3. The arrangement according to any one of the preceding claims, wherein the tag (204) is configured to receive the wireless detector signal, and to include the detector identity information and the load information in the wireless tag signal.

4. The arrangement according to claim 3, wherein the tag (204) is configured to detect its position, and wherein the tag signal is indicative of the detected position.

5. The arrangement according to claim 3 or 4, wherein the tag (204) is configured to send the wireless tag signal to a server (206) of the real-time locating system (200).

6. The arrangement according to claim 5, wherein the tag (204) is configured to generate the wireless tag signal upon receiving a request from the server (206).

7. The arrangement according to claim 1 or 2, wherein the at least one detector (6; 102) is configured to send the wireless detector signal to an anchor point (7) of the real-time locating system (1).

8. A real-time locating system (1) comprising:
at least one arrangement according to any one of the preceding claims; and
a server (8; 206) configured to receive the detector identity information and load information and to determine at least one of whether or not a load (4; 103; 202) is carried by the carrier (2; 100; 201) and an amount of load carried by the carrier (2; 100; 201).

9. The real-time locating system (200) according to claim 8,
wherein the server (206) is configured to receive the wireless tag signal.

10. The real-time locating system (1) according to claim 8 or 9, comprising several anchor points (7) intended to be arranged at respective fixed positions,
wherein each anchor point (7) is configured to receive the wireless tag signal and the wireless detector signal, and to generate a wireless anchor signal based on the received tag signal and the received detector signal, and
wherein the server (8) is configured to receive the wireless anchor signal.

11. The real-time locating system (1) according to claim 10, wherein the anchor points (7) are configured to generate the wireless anchor signals upon receiving a request from the server (8).

12. The real-time locating system (1) according to claim 10 or 11, wherein each anchor point (7) is configured to include respective time information in the wireless anchor signal, wherein the time information comprises a time of receipt of the wireless detector signal and a time of receipt of the wireless tag signal, and wherein the server (8) is configured to associate the wireless tag signal with the wireless detector signal based on the time information.

13. The real-time locating system (1) according to any one of the claims 8 to 12, wherein the server (8) is configured to transmit a wireless server signal to an external display device (9), wherein the wireless server signal is indicative of the position of the tag (5) and at least one of one of whether or not a load (4; 103) is carried by the carrier (2; 100) and an amount of load carried by the carrier (2).

14. A method for detecting a load (4; 103; 202) carried by a carrier (2; 100; 201) intended to be tracked by a real-time locating system (1; 200), wherein the method comprises:
arranging a tag (5; 101; 204) on the carrier (2; 100; 201);
arranging at least one detector (6; 102; 205) separately from the tag (5; 101; 204) on the carrier (2; 100; 201), wherein the at least one detector (6; 102; 205) is configured to detect the load (4; 103; 202) carried by the carrier (2; 100; 201);
generating, by the tag (5; 101; 204), a wireless tag signal allowing determination of a position of the tag (5; 101; 204); and
generating, by the detector (6; 102; 205), a wireless detector signal comprising detector identity information and load information, wherein the detector identity information allows for the detector (6; 102; 205) to be identified, and wherein the load information is indicative of at least one of whether or not a load (4; 103; 202) is carried by the carrier (2; 100; 201) and an amount of load carried by the carrier (2; 100; 201).

15. The method according to claim 14, comprising:
receiving, by a server (8; 206) of the real-time locating system (1; 200), the detector identity information and load information; and
determining, by the server (8; 206), at least one of whether or not a load (4; 103; 202) is carried by the carrier (2; 100; 201) and an amount of load carried by the carrier (2; 100; 201).
